# EUROPEAN PATENT SPECIFICATION

(11) **EP 0 482 917 B1**
(45) Date of publication and mention of the grant of the patent: **29.03.1995**
(21) Application number: 91309808.3
(22) Date of filing: 23.10.1991
(51) Int. Cl.: A21C 3/06, A21C 9/08

(54) **Method and apparatus for spacing and orienting croissant dough pieces**
Verfahren und Vorrichtung zur raumlichen Einteilung und Orientierung von Hörnchenteigstücken
Méthode et appareil pour séparer et orienter des morceaux de pâtes pour croissants

(30) Priority: 23.10.1990 JP 285621/90
(43) Date of publication of application: 29.04.1992
(73) Proprietor: RHEON AUTOMATIC MACHINERY CO. LTD., Utsunomiya-shi Tochigi-ken (JP)
(72) Inventor: Sadao, Ueno, Tochigi-ken (JP); Yasunori, Tashiro, Tochigi-ken (JP)
(74) Representative: Leale, Robin George

(56) References cited:
- EP-A- 0 284 835
- EP-A- 0 382 105
- BE-A- 902 440
- FR-A- 2 486 771
- GB-A- 2 045 195

## Description

The invention relates to a method and apparatus for spacing and orienting dough pieces, for use in a machine that automatically forms croissants or the like.

In forming croissants a dough sheet is first cut into dough pieces having suitable polygonal shapes. The dough pieces are then rolled up from one of their sides. When this is done continuously in a rolling-up means of a croissant molder, the dough pieces need to be arrayed with a predetermined side at right angles to the direction of transfer before being fed to the rolling-up means.

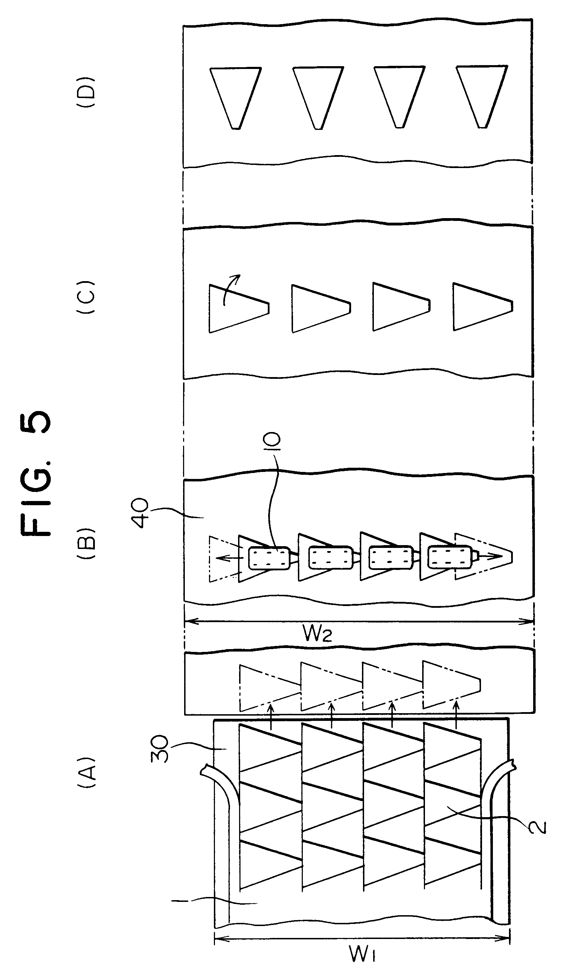

Our Japanese Patent No. 1,343,038 discloses an arraying apparatus for croissant dough pieces. As shown in Section A of Fig. 5 of the accompanying drawings, a dough sheet 1 is cut into triangular pieces with their bases aligned with the feeding direction. These are then conveyed from an upstream conveyor 30 to a downstream conveyor 40 that runs at a faster speed than the upstream conveyor. After the dough pieces have been transferred from the upstream conveyor 30 to the downstream conveyor 40, they are transversely spaced apart from one another by dough pieces holders 10, which move the dough pieces in the transverse direction (see Section B of Fig. 5), and at the same time they are turned 90 degrees (see Sections C and D of Fig. 5) so that the base of each piece now forms the leading end, aligned at right angles to the feeding direction.

In this apparatus the distance between the adjacent dough pieces has to be increased in the transverse direction, to avoid any interference between the corners of the adjacent dough pieces when they are being turned. As a result, if the width of the upstream conveyor 30 is W1, the width of the downstream conveyor 40 must be widened to W2. Thus, to provide enough room for the spacing and turning of the dough pieces, the downstream conveyor has to be made substantially wider than the upstream conveyor. This creates a disadvantage in that the apparatus becomes undesirably large.

EP-A-0382015 discloses a method and an apparatus according to the opening parts of claims 1 and 2.

The present invention is characterised by what is set out in the characterising parts of claims 1 and 2.

In a preferred embodiment of the invention an alignment plate is positioned downstream of the reorienting means to align the said predetermined sides of the dough pieces.

An embodiment of the invention will now be described by way of example and with reference to the accompanying drawings, in which:-
Fig. 1 is a schematic plan view to illustrate a manner of spacing and reorienting dough pieces in accordance with this invention;
Fig. 2 is a schematic side view of an apparatus according to the invention;
Fig. 3 is a schematic plan view of the apparatus of Fig. 2;
Fig. 4 is a side view, partially broken away, of reorienting means of the apparatus; and
Fig. 5 is a schematic view illustrating the manner of spacing and reorienting dough pieces in a prior art apparatus.

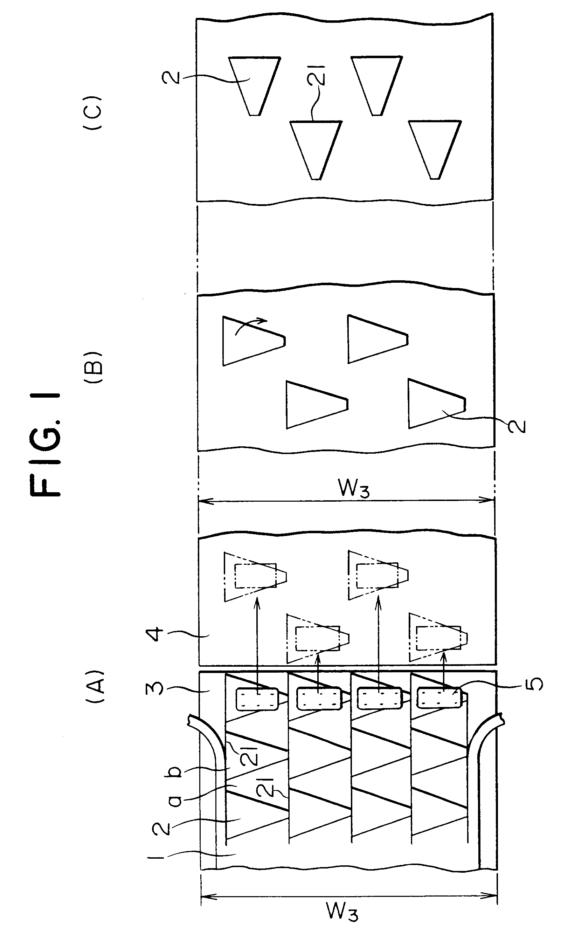

In Section A of Fig. 1, a dough sheet 1 is cut into pieces 2, each piece being shaped substantially as an isosceles triangle or a trapezoid, by any suitable cutter means (not shown). The dough pieces 2 form alternate rows a and b facing in opposite directions. Each row includes the bases of the isosceles triangles forming the dough pieces, which bases are aligned with the feeding direction of an upstream conveyor 3. One row has the bases facing towards one side of the apparatus, while the next row has the bases facing towards the other side. A downstream conveyor 4 adjoins the upstream conveyor 3. The conveying speed of the downstream conveyor is faster than that of the upstream conveyor.

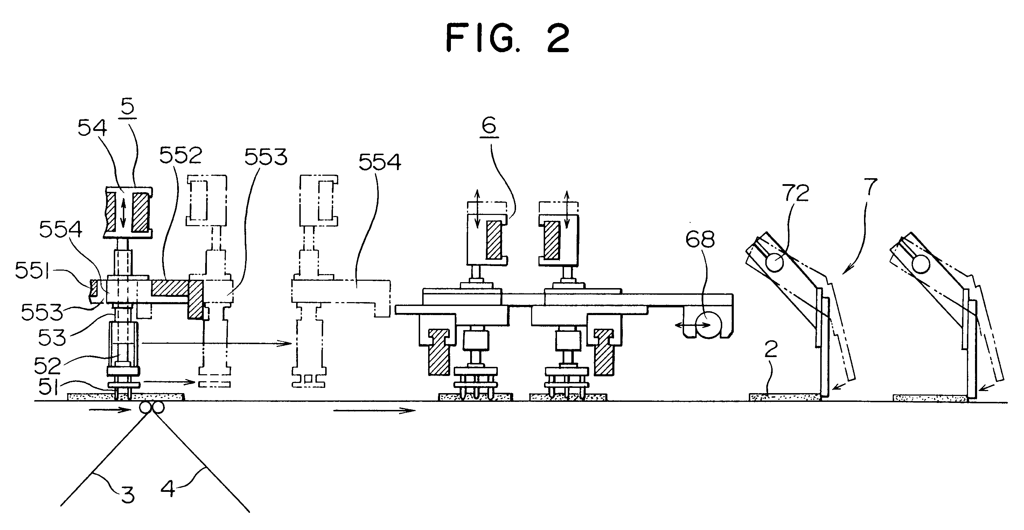

A spacing means 5 is located where the conveyors 3 and 4 adjoin (see Fig. 2). The spacing means includes vertical shafts 52 which are slidably inserted in tubes 53. The top end of each shaft 52 is fixedly connected to a holder member 54. The bottom end of the shaft 52 has claws 51 which are arranged to be inserted in a dough piece 2 and to pull it forwardly so as to space it apart from the dough sheet 1. The holder member 54 is arranged to make up-and-down reciprocating movements so as to cause the claws 51 to move up and down.

A spacing arm means 55 is located to move the spacing means along the conveyors 3 and 4. It comprises two arms 551 and 552 which are parallel to each other and which extend laterally across the width of the conveyors. The arms 551 and 552 are slidably supported on two rails 56 extending longitudinally on the respective sides of the conveyors. Cam followers 571 and 572 are fixed to the respective ends of the arms 551 and 552, and are received in grooves 581 and 582 respectively in a cylindrical cam 58 fixed on a driven shaft 583. The grooves 581 and 582 are so shaped that the distance of the travel of the arm 552 in the advancing direction is greater than that of the arm 551, when the cam 58 rotates. Brackets 553 and 554 are connected to the arms 551 and 552 alternately on the leading side and the trailing side of the respective arms. Each bracket supports a tube 53 of a spacing means 5 which corresponds to each dough piece in the row a or b.

When the cam 58 rotates, the cam followers 571 and 572 are respectively led in the grooves 581 and 582, thereby causing the spacing means 5 to be carried with the arms 551 and 552 in the advancing direction. As a result, the spacing means 5 carried by the arm 552 are moved a greater distance that are the spacing means 5 carried by the arm 551, thereby causing the spacing means 5 to come to a staggered arrangement, as shown in Fig. 1.

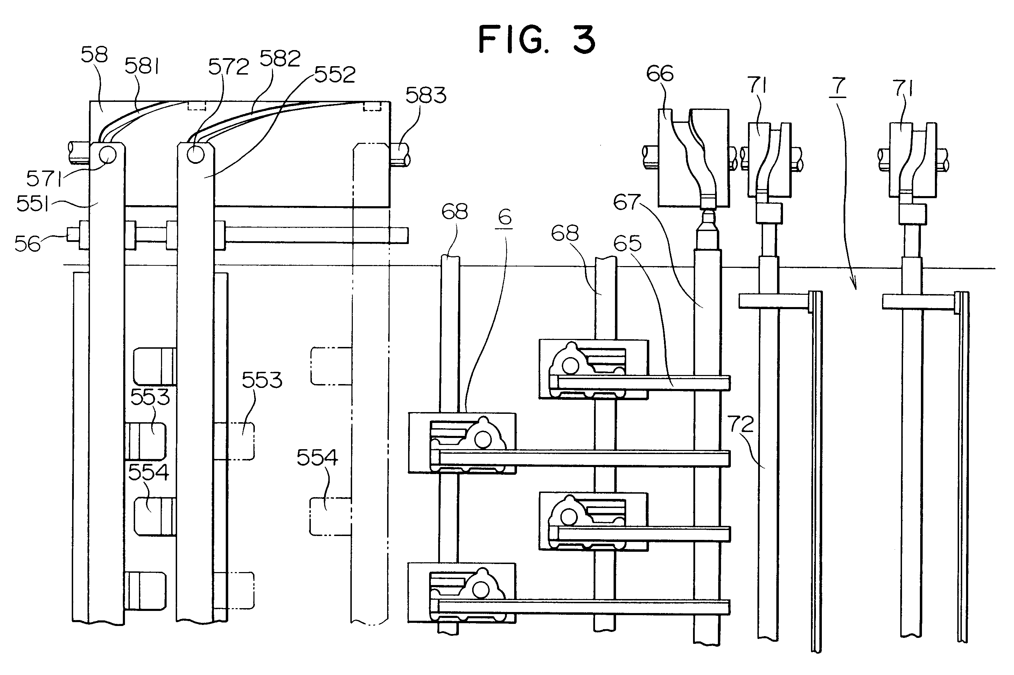

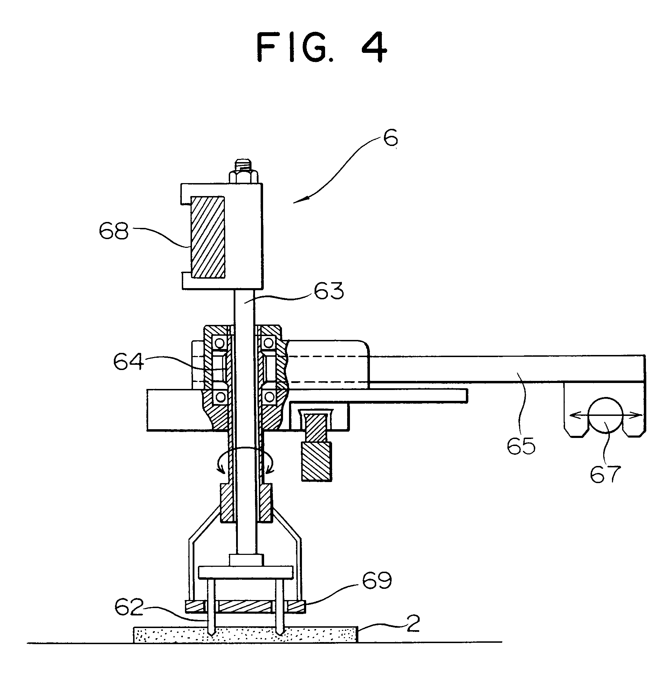

Figs. 3 and 4 show a plurality of reorienting means 6 which are arranged to hold the dough pieces by means of claws 62 and to rotate them so that their bases face in the advancing direction. Each reorienting means 6 includes a vertical shaft 63. A pinion gear 64 is provided on a shaft which is coaxial with the shaft 63 and is slidable on it. The top end of the shaft 63 is rotatably held by a holder member supported by a shaft holder 68. The bottom end of the shaft 63 is connected to the claws 62. A hold-down plate 69 is fixed to an end of the shaft which is provided with the pinion gear 64, and is formed with through-holes through which the claws 62 extend. Thus when the holder member supported by the shaft holder 68 makes a vertical reciprocating movement, the claws 62 are caused to move up and down. The pinion gear 64 meshes with the teeth of a rack member 65.

As shown in Fig. 3, two shaft holders 68 are located parallel to each other and extend laterally across the conveyor 4. The reorienting means 6 are alternately arranged in a staggered manner, and are alternately held by the respective shaft holders 68, so that each of the reorienting means 6 can correspond to a dough piece that has been arranged by the spacing means 5 in a staggered location. The rack members 65 are mounted on a shaft 67 straddling the width of the conveyor 4 at right angles to the direction of movement of the conveyor. One end of the shaft 67 engages in a groove in a driven cylindrical cam 66, the shaft of which extends parallel to the direction of the conveyor. The cam groove acts to horizontally and reciprocably move the shaft 67 carrying the rack members 65, as the cam 66 makes one revolution. Thus when the cam 66 rotates through 180 degrees, the rack members 65 are moved forwards or backwards. This movement of each rack member 65 causes it associated pinion gear 64 to turn through 90 degrees clockwise or counterclockwise, thereby causing the claws 62 to turn through 90 degrees clockwise or counterclockwise. The rotational direction of the claws 62 is selected according to the direction in which the base of the dough piece is facing when the dough piece is engaged the spacing means 5, so that the bases of all of the dough pieces become aligned to face in the advancing direction.

The sequence of operation of the reorienting means 6 is as follows: 1) the claws 62 move downwards, 2) they rotate the dough pieces in a direction depending on the direction of the row (a or b), 3) they move upward, and 4) they return. During their rotation the dough pieces 2 are made to slide on the conveyor.

Fig. 2 also shows alignment plates 7 which are positioned downstream of the reorienting means 6 and extend at right angles to the direction of movement of the conveyor 4. Each plate 7 is fixed on a transverse shaft 72, which is rotatably supported by a frame (not shown). An end of each shaft 72 engages eccentrically in a groove of a cylindrical cam 71. The rotation of the cam 71 causes the shaft 72 to rotate, thereby causing the plate 7 to swing about the shaft 72 so that when the plate is lowered it abuts the leading sides of the moving dough pieces, as indicated by the arrows. Thereby, the dough pieces are momentarily stopped and aligned with their bases at right angles to the direction of movement of the conveyor.

In the operation of the apparatus, as shown in Section A of Fig. 1 dough pieces 2 cut from the dough sheet 1 are conveyed on the upstream conveyor 3. At the position where the upstream conveyor 3 abuts the downstream conveyor 4, the spacing means 5 engages the corresponding rows of dough pieces 2 by means of the claws 51 descending into them. The cam 58 simultaneously rotates and causes the arms 551 and 552 to move in the direction of the movement of the conveyors, on the rails 56. As the distance of travel of the arm 552 is greater than that of the arm 551, dough pieces held by the arm 552 are moved ahead of the dough pieces held by the arm 551, as shown in Section B of Fig. 1. Then the claws 51 move up to release the dough pieces 2 onto the downstream conveyor 4. As a result, as shown in Section C of Fig. 1, the dough pieces 2 are now arrayed in staggered positions.

Thereafter, the dough pieces 2 move downstream to the station where the reorienting means 6 is positioned. The claws 62 move down to hold the dough pieces 2. When cams 66 are rotated, the claws 62 turn the dough pieces to direct their bases in the feeding direction of the conveyor.

Then, as the dough pieces 2 are conveyed downstream to the alignment plates 7, the shaft 72 is rotated to swing the plates 7 so that their ends abut the bases of the moving dough pieces. The dough pieces are thereby momentarily stopped, so that their bases are aligned across the conveyor. Then the shaft 72 is reversely rotated to release the dough pieces from the ends of the plates 7.

Thus in order to create the necessary space for the dough pieces to turn, the dough pieces are positioned in a staggered manner without being spaced further apart in the transverse direction. If any irregular positioning of the bases of the dough pieces occurs after they pass the orienting means, for example because the dough pieces disengage from the claws prematurely and do not turn as desired, or because dough pieces stick to the claws, the alignment plates will then align the bases of the dough pieces and correct any improper turning thereof. As a result, dough pieces may be fed with their bases facing in the proper direction to a croissant rolling-up apparatus at a downstream station.

As explained above, this apparatus does not need a large-width conveyor for reorienting. Thus less space is needed to install the apparatus. Also, production facilities are simplified, and at the same time, faulty rolling-up in the formation of croissants in the succeeding process is minimized.

## Claims

1. A method of spacing and orienting dough pieces (2) for use in making croissants or the like, comprising the steps of continuously conveying a dough sheet (1), cutting the dough sheet into polygonal shaped pieces, and turning the dough pieces to position a predetermined side of each dough piece at right angles to the conveying direction, characterised by spacing the pieces apart from one another in the feeding direction in a staggered manner but without spacing them further apart transversely to the feeding direction.

2. Apparatus for spacing and orienting dough pieces (2) for use in making croissants or the like, comprising an upstream conveyor (3) for feeding a continuous dough sheet (1), a cutting means for cutting the dough sheet into polygonal shaped pieces, with one predetermined side aligned with the feeding direction, a downstream conveyor (4) arranged in series with the upstream conveyor, the downstream conveyor being arranged to move faster than the upstream conveyor, and a reorienting means (6) for turning the dough pieces to position the said predetermined side of each dough piece at right angles to the feeding direction of the downstream conveyor, characterised by a dough-spacing means (5) located at the position where the dough pieces are transferred from the upstream conveyor to the downstream conveyor and arranged to space the dough pieces apart from one another in the feeding direction on the downstream conveyor in a staggered manner but without spacing them further apart transversely to the feeding direction.

3. Apparatus according to claim 2, including an alignment plate (7) positioned downstream of the reorienting means (6) to align the said predetermined sides of the dough pieces (2).

## Patentansprüche

1. Verfahren zum beabstandeten Anordnen und Orientieren von Teigstücken (2) zur Verwendung bei der Herstellung von Croissants oder dergleichen, umfassend die Schritte des kontinuierlichen Förderns einer Teigbahn (1), des Schneidens der Teigbahn zu vieleckig gestalteten Stücken und des Drehens der Teigstücke, um eine vorbestimmte Seite jedes Teigstücks im rechten Winkel zu der Förderrichtung anzuordnen, dadurch gekennzeichnet, daß die Stücke in der Vorbewegungsrichtung in versetzter oder gestaffelter Weise voneinander beabstandet werden, ohne sie jedoch quer zu der Vorbewegungsrichtung in größerem Abstand anzuordnen.

2. Vorrichtung zum Beabstanden und Orientieren von Teigstücken (2) zur Verwendung bei der Herstellung von Croissants oder dergleichen, umfassend einen stromaufwärtigen Förderer (3) zum Vorbewegen einer kontinuierlichen Teigbahn (1), eine Schneideinrichtung zum Schneiden der Teigbahn zu vieleckig gestalteten Stücken, wobei eine vorbestimmte Seite mit der Vorbewegungsrichtung ausgerichtet ist, einen stromabwärtigen Förderer (4), der in Reihe mit dem stromaufwärtigen Förderer angeordnet ist und der sich schneller als der stromaufwärtige Förderer bewegen kann, und eine Neuorientierungseinrichtung (6) zum Drehen der Teigstücke, um die genannte vorbestimmte Seite jedes Teigstücks im rechten Winkel zu der Vorbewegungsrichtung des stromabwärtigen Förderers anzuordnen, gekennzeichnet durch eine Teigbeabstandungseinrichtung (5), die an der Stelle angeordnet ist, an der die Teigstücke von dem stromaufwärtigen Förderer zu dem stromabwärtigen Förderer überführt werden, und die angeordnet ist, um die Teigstücke in der Vorbewegungsrichtung auf dem stromabwärtigen Förderer in einer versetzten oder gestaffelten Weise zu beabstanden, ohne sie jedoch quer zu der Vorbewegungsrichtung in größerem Abstand anzuordnen.

3. Vorrichtung nach Anspruch 2, umfassend eine Ausrichtplatte (7), die stromabwärts der Neuorientierungseinrichtung (6) angeordnet ist, um die genannten vorbestimmten Seiten der Teigstücke (2) auszurichten.

## Revendications

1. Procédé pour espacer et orienter des morceaux de pâte (2) à utiliser dans la production de croissants ou analogues, comprenant les étapes qui consistent à transporter en continu une feuille de pâte (1), à couper la feuille de pâte en morceaux de forme polygonale, et à tourner les morceaux de pâte pour positionner un côté prédéterminé de chaque morceau de pâte à angle droit avec la direction de transport, caractérisé par le fait qu'on écarte les morceaux les uns des autres dans la direction d'avance d'une manière décalée, mais sans les écarter davantage transversalement à la direction d'avance.

2. Appareil pour écarter et orienter des morceaux de pâte (2) à utiliser dans la production de croissants ou analogues, comportant un transporteur d'amont (3) pour faire avancer une feuille continue (1) de pâte, un moyen de coupe destiné à couper la feuille de pâte en morceaux de forme polygonale, un côté prédéterminé étant aligné avec la direction d'avance, un transporteur d'aval (4) disposé en série avec le transporteur d'amont, le transporteur d'aval étant agencé de façon à avancer plus vite que le transporteur d'amont, et un moyen (6) de réorientation destiné à tourner les morceaux de pâte pour positionner ledit côté prédéterminé de chaque morceau de pâte à angle droit avec la direction d'avance du transporteur d'aval, caractérisé par un moyen (5) d'espacement de la pâte placé dans la position où les morceaux de pâte sont transférés du transporteur d'amont au transporteur d'aval, et agencé de façon à espacer les morceaux de pâte à l'écart les uns des autres dans la direction d'avance sur le transporteur d'aval, d'une manière décalée, mais sans les espacer davantage transversalement à la direction d'avance.

3. Appareil selon la revendication 2, comprenant une plaque (7) d'alignement placée en aval du moyen (6) de réorientation pour aligner lesdits côtés prédéterminés des morceaux de pâte (2).
